# EUROPEAN PATENT SPECIFICATION

(11) **EP 2 397 444 B1**
(45) Date of publication and mention of the grant of the patent: **20.04.2016**
(21) Application number: 10741223.1
(22) Date of filing: 09.02.2010
(51) Int. Cl.: C02F 1/469, C02F 1/60, C02F 9/02, C02F 9/04, C02F 1/52, C02F 1/66, C02F 101/14, C02F 103/34, C02F 103/40

(54) **METHOD AND FACILITY FOR PROCESSING WASTE WATER CONTAINING FLUORINE AND SILICON**
VERFAHREN UND ANLAGE ZUR AUFBEREITUNG VON ABWASSER MIT FLUOR UND SILIZIUM
PROCÉDÉ ET INSTALLATION DE TRAITEMENT D'EAUX USÉES CONTENANT DU FLUOR ET DU SILICIUM

(30) Priority: 13.02.2009 JP 2009030867; 13.02.2009 JP 2009030868; 17.09.2009 JP 2009215695; 17.09.2009 JP 2009215696; 18.12.2009 JP 2009288060
(43) Date of publication of application: 21.12.2011
(73) Proprietor: Kobelco Eco-solutions Co., Ltd., Hyogo 651-0072 (JP)
(72) Inventor: TANIDA, Katsuyoshi, Kobe-shi Hyogo 651-2241 (JP); KINOSHITA, Tsutomu, Kobe-shi Hyogo 651-0072 (JP); CHIFUKU, Hiroyuki, Kobe-shi Hyogo 651-0072 (JP); ONODA, Sousuke, Kobe-shi Hyogo 651-2241 (JP)
(74) Representative: TBK
(86) International application number: PCT/JP2010/051864
(87) International publication number: WO 2010/092946

(56) References cited:
- JP-A- 9 176 874
- JP-A- 51 006 351
- JP-A- 2003 236 564
- JP-A- 2009 196 858
- US-A- 3 725 265
- US-A- 5 876 685

## Description

### TECHNICAL FIELD

The present invention relates to a method for treating waste water containing fluorine and silicon, a method for producing calcium fluoride, and a facility for treating fluorine-containing waste water.

### BACKGROUND ART

Waste water containing fluorine and silicon is generated from semiconductor manufacturing factories, solar battery manufacturing factories, liquid crystal manufacturing factories, factories having PFC (perfluorocarbon) treatment processes or silicon etching processes, or the like. Such waste water is treated, for example, as follows. Calcium hydroxide (Ca(OH)₂) is added to waste water containing fluorine and silicon so that alkaline reaction is conducted. This results in the generation of sludge containing calcium fluoride (CaF₂) and calcium silicate (CaSiO₃), and the generated sludge is separated and treated as industrial waste.

In regard to the process above, if it is possible to generate highly pure sediments with high calcium fluoride content is generated from the waste water, it becomes unnecessary to treat the generated sediments as industrial waste, on the contrary to the conventional approach. In other words, fluorine contained in waste water which has conventionally been treated as industrial waste is recycled as calcium fluoride.

Now, a method for obtaining highly pure sediments with high calcium fluoride content from waste water containing fluorine and silicon is recited, for example, in Patent Document 1. According to the method of Patent Document 1, waste water containing fluorine and silicon is diluted so that the silicon concentration in the waste water is adjusted to 500mg/L or lower as the SiO₂ content, and then the waste water is reacted with an aqueous calcium compound under the condition of pH4.5 to 8.5. The document recites that high pure sediments with the CaF₂ content of 90% or more are precipitated by the method.

### [Prior Art Documents]

### [Patent Documents]

[Patent Document 1] Japanese Patent No. 3240669

JP 51-6351 A describes a desalted and concentrated water treatment technique, in which desalted and concentrated water is adjusted to pH ≥ 7.5 by an alkali to precipitate and separate the metal hydroxide, and calcium is added to the supernatant after the separation.

However, the method recited in Patent Document 1 is disadvantageous in that, since it is necessary to dilute the waste water containing fluorine and silicon in advance to adjust the silicon concentration in the waste water to be 500mg/L or lower as the SiO₂ content, an amount of waste water to be treated is large as compared to other conventional methods. As a result, a larger waste water treatment facility is required as compared to the conventional methods, with the result that the installation space of the waste water treatment facility, the manufacturing costs, and the maintenance costs are high and large as compared to the conventional methods.

The present invention was done to solve the problem above, and an object (first object) of the invention is to provide a waste water treatment technology (pretreatment technology in particular) which makes it possible to recover fluorine at a high recovery rate as highly pure calcium fluoride, without diluting waste water containing fluorine and silicon, i.e. to recover fluorine from high-concentration waste water containing fluorine and silicon.

The second object of the present invention is to provide a waste water treatment technology (pretreatment technology in particular) which reduces costs for chemicals used for treating waste water containing fluorine and silicon to recover calcium fluoride.

### [Means for Solving the Problem and Effects]

The inventors diligently made investigations in view of the problem above, and found that the problem above is solved (the first object is achieved) in such a way that alkali is added to waste water containing fluorine and silicon to decompose fluosilicate (H₂SiF₆) in the waste water so that silicon in the waste water is precipitated as silicate, and the precipitated silicate is removed from the waste water by solid-liquid separation. Based on this founding, the present invention was completed.

That is to say, according to the first aspect of the present invention, a method for treating an acidic waste water containing fluorine and silicon in the form of fluosilicate, which is defined in claim 1, includes: an alkali addition step of adding alkali to waste water containing fluorine and silicon; and a solid-liquid separation step of conducting solid-liquid separation of silicate precipitated as a result of the alkali addition step.

According to this arrangement, the silicon is removed as silicate from the waste water in such a way that the solid-liquid separation of the silicate precipitated as a result of the alkali addition step is conducted. As a result, even if the waste water containing fluorine and silicon is diluted, i.e., even if the high-concentration waste water containing fluorine and silicon is treated, fluorine is recovered as highly pure calcium fluoride at a high recovery rate, when the calcium fluoride is recovered (recycled).

In addition to the above, the present invention is preferably arranged so that in the alkali addition step, the pH of the waste water is adjusted to be 6 or higher. This precipitates the decomposition of fluosilicate (H₂SiF₆) and hence the amount of silicate to be precipitated is increased. In short, the removal rate of silicon is improved.

In addition to the above, the present invention is preferably arranged so that, in the alkali addition step, an amount of the added alkali is one equivalent or more of the fluorine in the waste water. The pH of the waste water is adjusted to be about 6.5 or higher as a result, thereby precipitating the decomposition of fluosilicate (H₂SiF₆) and improving the amount of silicate to be precipitated.

The equivalent above indicates molar equivalent. The molar equivalent indicates the ratio between the amounts of substances (in units of moles [mol]).

In addition to the above, the present invention is preferably arranged so that the alkali is sodium hydroxide or potassium hydroxide.

The addition of sodium hydroxide or potassium hydroxide as an additive to the waste water containing fluorine and silicon is advantageous in that the post-treatment of the treated waste is easily done as compared to the case of the addition of ammonia.

Furthermore, using potassium hydroxide as an additive makes it possible to deal with waste water with a high fluorine concentration. In addition to the above, since sodium hydroxide is less expensive than other types of additives, using sodium hydroxide as an additive reduces the costs for chemicals.

According to the present invention, a method as defined in claim 1 includes the step of recovering the calcium fluoride by adding water-soluble calcium to the separated liquid obtained in the solid-liquid separation step of the aforesaid first aspect of the invention (the method for treating waste water containing fluorine and silicon).

According to this arrangement, fluorine is recovered as highly pure calcium fluoride at a high recovery rate by adding the water-soluble calcium to the waste water (separated liquid) from which the silicon has been removed and recovering the calcium fluoride. In other words, even if the high-concentration waste water containing fluorine and silicon is treated, fluorine is recovered as highly pure calcium fluoride at a high recovery rate.

According to the second aspect of the present invention, a facility for treating an acidic waste water containing fluorine and silicon in the form of fluosilicate, which is defined in claim 6, includes: a precipitation unit which precipitates silicate by adding alkali to waste water containing fluorine and silicon; and a solid-liquid separator which is provided on the downstream of the precipitation unit and obtains a separated liquid containing fluorine by conducting solid-liquid separation of the precipitated silicate.

In addition to the above, the present invention is preferably arranged so that, in the precipitation unit, the pH of the waste water is adjusted to be 6 or higher. This precipitates the decomposition of fluosilicate (H₂SiF₆) and hence the amount of silicate to be precipitated is increased. In short, the removal rate of silicon is improved.

In addition to the above, the present invention is arranged so that a calcium fluoride recovery unit which is provided on the downstream of the solid-liquid separator and recovers calcium fluoride by adding water-soluble calcium to the separated liquid is further included.

The inventors diligently made further investigations in view of the problem above, and found that the problem above is solved (the second object is achieved) in such a way that, a separated liquid containing fluorine after the solid-liquid separation is caused to pass through an electrodialyser having a bipolar membrane, a cation exchange membrane, and an anion exchange membrane so that the separated liquid is separated into an acidic solution containing hydrogen fluoride and an alkaline solution. Based on this founding, the present invention was completed.

That is to say, according to the present invention, a method for treating an acidic waste water is defined according to claim 1

According to this arrangement, an acidic solution containing fluorine is obtained by supplying the separated liquid obtained in the solid-liquid separation step to the electrodialyser having the bipolar membrane and separating this separated liquid into an acidic solution containing hydrogen fluoride and an alkaline solution. It is therefore possible, when recovering (recycling) calcium fluoride, to do away with the addition of acid (chemical) from the outside or to reduce an amount of acid (chemical) to be added. In other words, it is possible to reduce the costs for chemicals when calcium fluoride is recovered by treating waste water containing fluorine and silicon.

The present invention is arranged so that the waste water is acidic waste water, and an alkali addition step of adding alkali to the waste water to precipitate silicate is conducted before the solid-liquid separation step. The silicate precipitated in the step above is separated from the waste water in the subsequent solid-liquid separation step.

In addition to the above, the present invention is preferably arranged so that the alkaline solution separated in the hydrogen fluoride separation step is caused to return to the alkali addition step and added to the waste water in the alkali addition step.

According to this arrangement, since the alkaline solution separated in the hydrogen fluoride separation step is caused to return to the alkali addition step, the amount of alkali newly added in the alkali addition step is reduced.

In addition to the above, the present invention is preferably arranged so that the alkali is sodium hydroxide or potassium hydroxide.

The addition of sodium hydroxide or potassium hydroxide as an additive to the waste water containing fluorine and silicon is advantageous in that the post-treatment of the treated waste is easily done as compared to the case of the addition of ammonia.

Furthermore, using potassium hydroxide as an additive makes it possible to deal with waste water with a high fluorine concentration. In addition to the above, since sodium hydroxide is less expensive than other types of additives, using sodium hydroxide as an additive reduces the costs for chemicals.

The method of claim 1 includes the step of recovering the calcium fluoride by adding water-soluble calcium to the acidic solution containing the hydrogen fluoride, the acidic solution being obtained in the method.

According to this arrangement, it is possible, when recovering calcium fluoride, to do away with the addition of acid (chemical) from the outside or to reduce an amount of acid (chemical) to be added.

According to the invention, a facility for treating waste water as defined in claim 6 includes: a solid-liquid separator which obtains a separated liquid containing fluorine by conducting solid-liquid separation of silicate in waste water containing fluorine and silicon; and an electrodialyser which is provided on the downstream of the solid-liquid separator and includes a bipolar membrane, a cation exchange membrane, and an anion exchange membrane, by which the separated liquid is separated into an acidic solution containing hydrogen fluoride and an alkaline solution.

The present invention is arranged so that the waste water is acidic waste water, and a precipitation unit which precipitates silicate by adding alkali to the waste water is provided on the upstream of the solid-liquid separator.

In addition to the above, the present invention is preferably arranged so that an alkali returning unit which returns the alkaline solution separated by the electrodialyser to the precipitation unit and adds the alkaline solution to the waste water is further included.

The present invention is arranged so that a calcium fluoride recovery unit which is provided on the downstream of the electrodialyser and recovers calcium fluoride by adding water-soluble calcium to the acidic solution containing the hydrogen fluoride is further included.

### BRIEF DESCRIPTION OF THE DRAWINGS

Fig. 1 is a processing flow chart showing a method for treating waste water useful for understanding the present invention.
Fig. 2 is a graph showing a result of an optimal pH examination experiment in the first step.
Fig. 3 is a graph showing a result of a sodium hydroxide addition amount confirmation experiment in the first step.
Fig. 4 is a processing flow chart showing a method for treating waste water according to the present invention.
Fig. 5 shows the internal structure of the electrodialyser shown in Fig. 4.

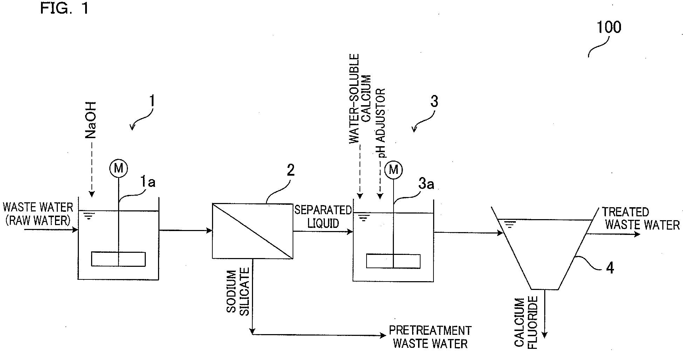

The following will describe the present invention with reference to figures. Fig. 1 is a processing flow chart showing a method for treating waste water (method for treating waste water containing fluorine and silicon). This describes a case where the waste water (raw water) containing fluorine and silicon is acidic.

As shown in Fig. 1, a waste water treatment facility 100 (facility for treating fluorine-containing waste water) for implementing the treatment method useful for understanding the invention includes, from the upstream of the processing, a pH controlling tank 1, a solid-liquid separator 2, a reaction tank 3, and a sedimentation tank 4. The pH controlling tank 1, the solid-liquid separator 2, the reaction tank 3, and the sedimentation tank 4 are connected to one another by pipes or the like.

The pH controlling tank 1 is provided with an agitator 1a, whereas the reaction tank 3 is provided with an agitator 3a. It is noted that the pH controlling tank 1 is equivalent to a precipitation unit of the present invention. Furthermore, the reaction tank 3 and the sedimentation tank 4 constitute a calcium fluoride recovery unit of the present invention. When silicon exists in waste water with high concentration of fluorine, under acid conditions the fluorine reacts with the silicon and exists as fluosilicate (H₂SiF₆) in the waste water.

### (First Step (Alkali Addition Step))

In the first step, sodium hydroxide (NaOH) is added to the waste water (raw water) containing fluorine and silicon. As shown in Fig. 1, the waste water (raw water) containing fluorine and silicon is supplied to the pH controlling tank 1 and a sodium hydroxide solution is introduced into the pH controlling tank 1, and then the waste water is agitated by the agitator 1a.

At this stage, the fluorine and silicon exist in the form of fluosilicate (H₂SiF₆) in the waste water. As the sodium hydroxide solution is added to the waste water containing fluorine and silicon and agitation is carried out, the fluosilicate (H₂SiF₆) is decomposed and the silicon is precipitated in the waste water as sodium silicate (Na₂SiO₃).

It is noted that the pH in the waste water is preferably adjusted to not lower than 6, more preferably to fall within the range of 6.5 to 7.5, and further preferably about 7, by adding sodium hydroxide to the waste water containing fluorine and silicon.

When the pH of the waste water is adjusted to be not lower than 6, the decomposition of the fluosilicate (H₂SiF₆) is facilitated and an amount of sodium silicate to be precipitated is increased. When the pH of the waste water is arranged to fall within the range of 6.5 to 7.5, an amount of precipitated sodium silicate is further increased and unnecessary addition of alkali (i.e. adding alkali for an amount larger than required for the decomposition of fluosilicate) is prevented. In a later-described third step, the pH of the separated liquid is adjusted to be acidic by a pH adjustor, and the separated liquid is reacted with water-soluble calcium under acid conditions. In this way, when the pH of the waste water is arranged to be 7.5 or lower, the amount of the pH adjustor added to the reaction tank 3 in the third step is reduced. In addition to the above, when the pH of the waste water is arranged to be about 7, the amount of precipitated sodium silicate is increased, at the same time the amounts of the chemicals (i.e. the alkali added in the first step and the pH adjustor added in the third step) are reduced.

The alkali added to the waste water containing fluorine and silicon may be ammonia (ammonia water or ammonia gas) or other types of alkalis, instead of the sodium hydroxide (NaOH) described above. Apart from sodium hydroxide (NaOH), potassium hydroxide (KOH) may be preferred as the additive. (This holds true also in later-described Embodiment).

When ammonia is added to the waste water containing fluorine and silicon, fluosilicate (H₂SiF₆) is decomposed into ammonium fluoride (NH₄F) and silica (SiO₂). In this regard, the solubility of the ammonium fluoride is high, i.e. about 849000mg/L. Therefore, the addition of ammonia is suitable for waste water with a high fluorine concentration.

In the meanwhile, when potassium hydroxide is added to the waste water containing fluorine and silicon, fluosilicate (H₂SiF₆) is decomposed into potassium fluoride (KF) and potassium silicate (K₂SiO₃). In this regard, the solubility of the potassium fluoride is very high, i.e. about 1017000mg/L. Therefore the addition of potassium hydroxide is suitable for waste water with a very high fluorine concentration.

On the other hand, the addition of sodium hydroxide is advantageous in that the post-treatment of the treated waste water after the recovery of fluorine (calcium fluoride) is easily done as compared to the case of the addition of ammonia. When sodium hydroxide is added, the fluosilicate (H₂SiF₆) is decomposed into sodium fluoride (NaF) and sodium silicate (Na₂SiO₃). The solubility of sodium fluoride is about 41010mg/L. Deducing from the solubility of sodium fluoride, sodium hydroxide is suitably chosen as alkali to be added, when the fluorine concentration of the waste water is about 18000mg/L or lower, from the viewpoint of the solubility of the fluorine. When waste water with a fluorine concentration of higher than about 18000mg/L is treated without dilution, potassium hydroxide or ammonia is preferred as alkali to be added.

### (Second Step (Solid-Liquid Separation Step))

In the second step, sodium silicate (Na₂SiO₃) precipitated in the first step is subjected to solid-liquid separation. As shown in Fig. 1, the waste water sufficiently agitated in the pH controlling tank 1 is supplied to the solid-liquid separator 2. By the solid-liquid separator 2, silicon in the waste water is ejected from the system as sodium silicate (Na₂SiO₃), and then treated, for example, as industrial waste. It is noted that fluorine is dissolved in the separated liquid. The separated liquid is supplied to the reaction tank 3 on the subsequent stage.

Examples of the solid-liquid separator 2 include (1) filter, (2) centrifugal separator, (3) centrifugal separator + filter, and (4) filter press. (The same also holds true for later-described Embodiment).

When the solid-liquid separation is achieved by filtering (by using a filter), solid-liquid separation is stably carried out. When the solid-liquid separation is achieved by centrifugal separation (by using a centrifugal separator), the cost of the solid-liquid separation is lower than the case of filtering. When the solid-liquid separation is achieved by the filter press, the solid-liquid separation is easy and costs lower as compared to the case of filtering (by using a filter), and is stably carried out.

In addition to the above, the following may be carried out: after the solid-liquid separation is carried out by centrifugal separation (by using a centrifugal separator), the centrifuge supernatant liquid is left at rest and the supernatant thereof is supplied to the reaction tank 3 on the subsequent stage, as a separated liquid. Leaving the centrifuge supernatant liquid at rest causes a low-density component (Na₂SiO₃), which is included in the centrifuge supernatant liquid and was not removed by the centrifugal separation, to precipitate, and hence more sodium silicate (silicon) is removed.

Alternatively, centrifugal separation (by a centrifugal separator) may be carried out before the solid-liquid separation by filtering (by using a filter). When the solid-liquid separation by filtering (by using a filter) is carried out after the solid-liquid separation by centrifugal separation (by a centrifugal separator), the load on the filter is reduced and the cost of filter maintenance is reduced as compared to the case where the solid-liquid separation is carried out solely by a filter.

In addition to the above, the following may be carried out: after the solid-liquid separation by the centrifugal separation (by a centrifugal separator), the centrifuge supernatant liquid is left at rest, the supernatant thereof is further filtered, and the filtered water is supplied as separated liquid to the reaction tank 3 on the subsequent stage. This further ensures the removal of Na₂SiO₃.

The first step and the second step described above are the pretreatment of the waste water containing fluorine and silicon. As a result of these pretreatment steps, silicon is removed from the waste water as silicate. Consequently, fluorine is recovered as calcium fluoride at a high recovery rate without diluting the waste water containing fluorine and silicon, i.e. by treating the high-concentration waste water containing fluorine and silicon. A specific example of the fluorine recovery will be described later.

### (Third Step (Calcium Fluoride Recovery Step))

In the third step, water-soluble calcium is added to the separated liquid obtained in the second step and fluorine is recovered as calcium fluoride. As shown in Fig. 1, first of all, water-soluble calcium and a pH adjustor is added to the separated liquid supplied from the solid-liquid separator 2 to the reaction tank 3, and agitation is conducted by the agitator 3a. The addition of the pH adjustor lowers the pH of the separated liquid. As the separated liquid is reacted with the water-soluble calcium under acidic conditions in this way, calcium fluoride (CaF₂) with relatively large particle sizes are precipitated (crystallized). Examples of the pH adjustor include hydrochloric acid, nitric acid, sulfuric acid, and acetic acid.

Thereafter, the liquid in the reaction tank 3 is supplied to the sedimentation tank 4 and calcium fluoride is precipitated at the bottom of the tank. Then the calcium fluoride is recovered from the bottom. The supernatant of the sedimentation tank 4 is, as treated waste water, to an unillustrated treatment facility on the subsequent stage.

Examples of the water-soluble calcium added to the separated liquid supplied to the reaction tank 3 contain calcium chloride, calcium nitrate, calcium acetate, calcium sulfate, and calcium carbonate. (The same also holds true for later-described Embodiment). Using such types of water-soluble calcium makes it possible to increase the calcium concentration while maintaining the acidic conditions, with the result that the precipitation of CaF₂ is facilitated. It is noted that, although alkaline water-soluble calcium such as calcium hydroxide is usable, the precipitation performance in this case is lower than the case of acidic water-soluble calcium.

The recovery of calcium fluoride from the separated liquid may be carried out in a different manner: after adding water-soluble calcium to the separated liquid obtained in the second step and agitation is carried out, coagulative precipitation is performed. Examples of the coagulant include a nonionic polymer coagulant and an anionic polymer coagulant.

As described above, fluorine is recovered as highly pure calcium fluoride at a high recovery rate in such a way that, after in the second step silicon is removed as silicate from the waste water by the solid-liquid separation, in the third step water-soluble calcium is added to the waste water (separated liquid) from which silicon has been removed, and then calcium fluoride is recovered.

### (Result of Optimal pH Examination Experiment in First Step)

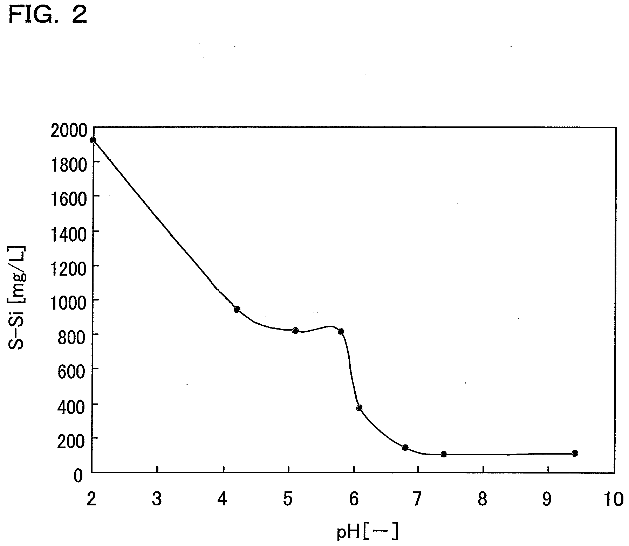

Fig. 2 is a graph showing a result of an optimal pH examination experiment in the first step. More specifically, in the graph of Fig. 2, changes in the soluble silicon concentration (S-Si) are plotted when a sodium hydroxide solution was added to waste water containing fluorine and silicon with the fluorine concentration of about 8000mg/L. As shown in Fig. 2, when the pH of the waste water was increased by adding the sodium hydroxide solution, the soluble silicon concentration in the waste water decreased at first. Subsequently, after the decrease was stopped, the decreasing trend of the soluble silicon concentration was observed again. The graph also shows that the slope of the curve is changed at around the pH6. Furthermore, when the pH of the waste water exceeded values about 7, the soluble silicon concentration no longer decreased. On the other hand, the S-Si was on a slight increasing trend after the pH exceeded values about 7. It is noted that the soluble silicon concentration (S-Si) is an indicator of the presence of silicon in the waste water in the state of fluosilicate (H₂SiF₆).

According to the graph, when the pH of the waste water is arranged to be not lower than 6, the S-Si is lower than 400mg/L (i.e. an amount of silicon in the state of fluosilicate (H₂SiF₆) is small), the decomposition of the fluosilicate (H₂SiF₆) is facilitated, and the amount of sodium silicate to be precipitated is increased. Furthermore, when the pH of the waste water is arranged to fall within the range of 6.5 to 7.5, the S-Si is lower than 200mg/L, the amount of sodium silicate to be precipitated is further increased, and unnecessary addition of alkali (i.e. adding alkali for an amount larger than required for the decomposition of fluosilicate) is prevented. Furthermore, when the pH of the waste water is about 7, the S-Si is about 100mg/L and the improvement in the amount of precipitated sodium silicate and the reduction in the amount of chemicals to be added are both achieved.

### (Result of Sodium Hydroxide Addition Amount Confirmation Experiment in First Step)

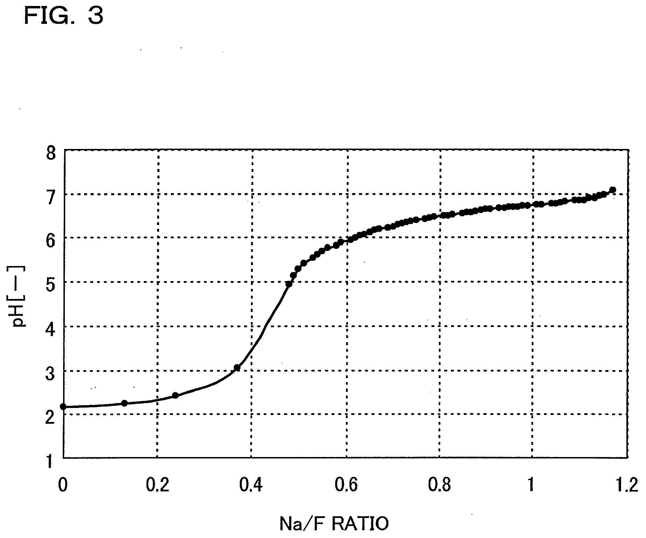

Fig. 3 is a graph showing a result of sodium hydroxide addition amount confirmation experiment in the first step. In this experiment, how much sodium hydroxide (NaOH) must be added to the waste water containing fluorine and silicon to change the pH of the waste water to be about 7 was examined. As shown in Fig. 3, to change the pH of the waste water containing fluorine and silicon to about 7, fluorine forming monovalent anions and the same amount of sodium forming monovalent cations are required. In other words, one equivalent of sodium is required for the fluorine. This equivalent indicates molar equivalent. The molar equivalent indicates the ratio between the amounts of substances (in units of moles [mol]).

In addition the above, Fig. 3 indicates that, when sodium hydroxide (alkali) equivalent or more of fluorine in the waste water is added, the pH of the waste water is about 6. 5 or higher. This facilitates the decomposition of fluosilicate (H₂SiF₆) and increases the amount of silicate to be precipitated.

### (Result of Experiment to Decompose Fluosilicate (H₂SiF₆) by Ammonia)

When sodium hydroxide (NaOH) was added to the waste water containing fluorine and silicon whose fluorine concentration was about 8000mg/L and the pH of the waste water was adjusted to be about 7, as shown in Fig. 2, the soluble silicon concentration (S-Si) in the waste water was about 100mg/L. On the other hand, when ammonia was added to the waste water containing fluorine and silicon and the pH of the waste water was adjusted to be about 7, the soluble silicon concentration (S-Si) in the waste water was about 100mg/L in the same manner as the case of the addition of sodium hydroxide. As such, the decomposition of fluosilicate by ammonia is as effective as the decomposition by adding sodium hydroxide.

### (Results of Solid-Liquid Separation Experiment)

The following will describe the result of solid-liquid separation experiments when the solid-liquid separation method is filtering, centrifugal separation, centrifugal separation + leaving centrifuge supernatant liquid at rest (a centrifuge supernatant liquid is left at rest and a resultant supernatant liquid is used as a separated liquid), or filter press.

First, in the case of filtering, the soluble silicon concentration (S-Si) of the separated liquid was about 100mg/L. In the cases of the centrifugal separation, the centrifugal separation + leaving centrifuge supernatant liquid at rest, and the filter press, the S-Si of the separated liquid were 140 to 150mg/L, about 110mg/L, and about 100mg/L, respectively. As such, the solid-liquid separation when the filtering or the filter press is used as the solid-liquid separation method is more stable than the solid-liquid separation by the centrifugal separation. However, even if the centrifugal separation is used, the solid-liquid separation equivalent to the case of the filtering (or filter press) is achieved if the centrifuge supernatant liquid is left at rest.

### (Embodiment)

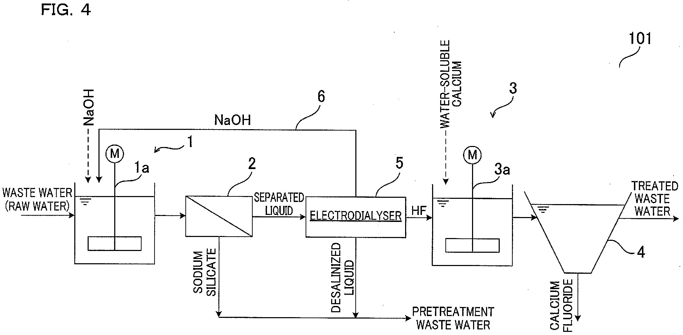

Fig. 4 is a processing flow chart showing a method for treating waste water (method for treating waste water containing fluorine and silicon) according to an Embodiment of the present invention. This example is a case where the waste water (raw water) containing fluorine and silicon is acidic.

It is noted that, as to the components constituting the waste water treatment facility 101 of the present embodiment, those identical with the components constituting the waste water treatment facility 100 described above are denoted by the same reference numerals. Furthermore, the descriptions of the treating methods of the present embodiment will be simplified or omitted if they are identical with those described above.

As shown in Fig. 4, a waste water treatment facility 101 (facility for treating fluorine-containing waste water) for implementing the treatment method of the present embodiment includes, from the upstream of the processing, a pH controlling tank 1, a solid-liquid separator 2, an electrodialyser 5, a reaction tank 3, and a sedimentation tank 4. The pH controlling tank 1, the solid-liquid separator 2, the electrodialyser 5, the reaction tank 3, and the sedimentation tank 4 are connected with one another by pipes or the like. The pH controlling tank 1 is equivalent to the precipitation unit of the present invention. The reaction tank 3 and the sedimentation tank 4 constitute the calcium fluoride recovery unit of the present invention.

The waste water treatment facility 101 of the present embodiment is primarily different from the waste water treatment facility 100 described above in that, in the present embodiment the electrodialyser 5 is provided between the solid-liquid separator 2 and the reaction tank 3.

### (First Step (Alkali Addition Step))

In the first step, sodium hydroxide (NaOH) is added to waste water (raw water) containing fluorine and silicon. As shown in Fig. 4, the waste water (raw water) containing fluorine and silicon is supplied to the pH controlling tank 1, and a sodium hydroxide solution is introduced into the pH controlling tank 1 and the waste water is agitated by using an agitator 1a.

At this stage, fluorine and silicon exist in the waste water in the form of fluosilicate (H₂SiF₆). As a sodium hydroxide solution is added to the waste water containing fluorine and silicon and agitation is carried out, the fluosilicate (H₂SiF₆) is decomposed and the silicon is precipitated as sodium silicate (Na₂SiO₃) in the waste water.

It is noted that, in the same manner as described above, the pH of the waste water is adjusted to 6 or higher, preferably to fall within the range of 6.5 to 7.5, and more preferably to about 7, by adding sodium hydroxide to the waste water containing fluorine and silicon.

When the pH of the waste water is adjusted to be not lower than 6, the decomposition of the fluosilicate (H₂SiF₆) is facilitated and an amount of precipitated sodium silicate is increased. When the pH of the waste water is arranged to fall within the range of 6.5 to 7.5, an amount of precipitated sodium silicate is further increased and unnecessary addition of alkali (i.e. adding alkali for an amount larger than required for the decomposition of fluosilicate) is prevented. In addition to the above, when the pH of the waste water is arranged to be about 7, the amount of sodium silicate to be precipitated is increased, at the same time the amount of the chemical (i.e. the alkali added in the first step) is reduced.

### (Second Step (Solid-Liquid Separation Step))

In the second step, solid-liquid separation of the sodium silicate (Na₂SiO₃) precipitated in the first step is carried out. As shown in Fig. 4, the waste water sufficiently agitated in the pH controlling tank 1 is supplied to the solid-liquid separator 2. By the solid-liquid separator 2, the silicon in the waste water is ejected from the system as sodium silicate (Na₂SiO₃), and then treated, for example, as industrial waste. It is noted that fluorine is dissolved in the separated liquid. The separated liquid is supplied to the electrodialyser 5 on the subsequent stage.

### (Third Step (Hydrogen Fluoride Separation Step))

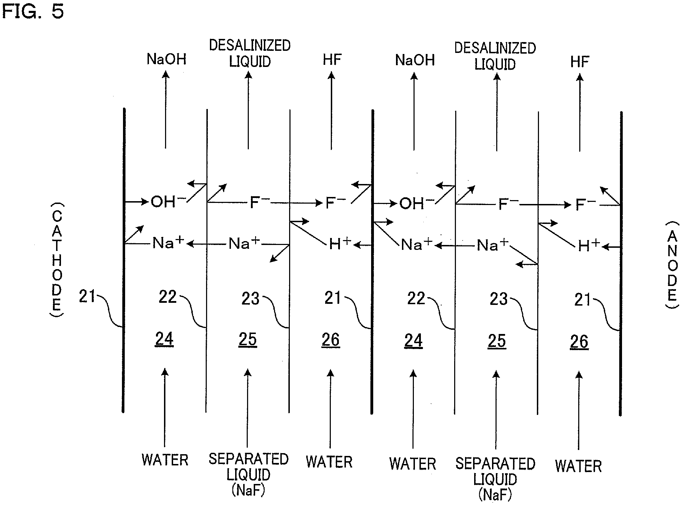

In the third step, the separated liquid obtained in the second step is supplied to the electrodialyser 5 and sodium fluoride (NaF) in the separated liquid is separated into hydrogen fluoride (HF) and sodium hydroxide (NaOH). First, the electrodialyser 5 will be described with reference to Fig. 5.

The electrodialyser 5 includes a bipolar membrane 21, a cation exchange membrane 22 (cation exchange membrane), and an anion exchange membrane 23 (anion exchange membrane), and is divided, by these three types of membranes, into a desalinization chamber 25, an alkali line chamber 24, and an acid line chamber 26. In addition to the above, the three types of membranes constitute a cell, and the internal structure of the electrodialyser 5 is such that a large number of the cells are combined and layered in the form of filter press, and electrodes are provided at the respective ends. A DC current is applied to the electrodes so that the sodium fluoride (NaF) in the separated liquid is separated into hydrogen fluoride (HF) and sodium hydroxide (NaOH). The bipolar membrane 21 is arranged so that one face of the membrane functions as a cation exchange membrane whereas the other face functions as an anion exchange membrane.

The acid line chamber 26 of the electrodialyser 5 is connected to the reaction tank 3 via a path (e.g. a pipe). The alkali line chamber 24 is connected to the pH controlling tank 1 via a path 6 (e.g. a pipe). The desalinization chamber 25 is connected to a waste water line.

### (Separation into Acid and Alkali)

At this stage, the separated liquid (NaF) having been supplied from the solid-liquid separator 2 to the electrodialyser 5 flows in the desalinization chamber 25 of the electrodialyser 5. In so doing, Na⁺ which is cations moves to the alkali line chamber 24 via the cation exchange membrane 22, whereas F⁻ which is anions moves to the acid line chamber 26 via the anion exchange membrane 23.

In the meanwhile, a part of the water running in the alkali line chamber 24 and the acid line chamber 26, which contacts the bipolar membrane 21, permeates through the bipolar membrane 21 and is ionized into H⁺ and OH⁻, and the H⁺ moves to the acid line chamber 26 on the cathode side. The OH⁻ moves to the alkali line chamber 24 on the anode side.

In the acid line chamber 26 HF (hydrogen fluoride) is generated from H⁺ and F⁻, whereas in the alkali line chamber 24 NaOH (sodium hydroxide) is generated from Na⁺ and OH⁻. In the desalinization chamber 25, Na⁺ and F⁻move to the alkali line chamber 24 and the acid line chamber 26, respectively, with the result that the concentration of NaF is decreased (i.e. desalinization is conducted) and the desalinized separated liquid is exhausted from the desalinization chamber 25. The HF (hydrogen fluoride) is supplied from the acid line chamber 26 to the reaction tank 3, and the NaOH (sodium hydroxide) returns from the alkali line chamber 24 to the pH controlling tank 1.

### (Return of Alkali)

In the present embodiment, the electrodialyser 5 is connected to the pH controlling tank 1 by the path 6. The path 6 is an alkali returning unit by which NaOH separated by the electrodialyser 5 is returned to the pH controlling tank 1 and added to waste water (raw water). The path 6 may be provided with a pump (which is a component of the alkali returning unit) . This alkali returning unit returns the NaOH separated in the third step to the first step and adds the same to the waste water (raw water).

The first step to the third step described above are the pretreatment of the waste water containing fluorine and silicon. In the third step above, the separated liquid obtained in the second step is supplied to the electrodialyser 5 having the bipolar membrane 21 to separate the sodium fluoride (NaF) in the separated liquid into hydrogen fluoride (acidic) and sodium hydroxide, with the result that an acid solution (hydrogen fluoride acid solution) containing fluorine is obtained. It is therefore unnecessary in this case to add an acid (chemical) when recovering calcium fluoride (i.e. recycle of fluorine).

The waste water (raw water) containing fluorine and silicon supplied to the pH controlling tank 1 may contain an acid (e.g. nitric acid) different from the fluorine. In such a case, an amount of alkali (amount of chemical) used in the first step may be enormous. In this regard, an amount of newly added alkali is reduced in the present embodiment, because NaOH separated by the electrodialyser 5 in the third step is returned to the pH controlling tank 1.

In addition to the above, the pretreatment waste water (desalinized solution) exhausted from the electrodialyser 5 has a low salt concentration. This reduces the corrosion of the treatment facility (not illustrated) of the pretreatment waste water and reduces the frequency of scaling required in the treatment facility.

### (In Case of Alkaline or Neutral Waste Water (Raw Water) Containing Fluorine and Silicon)

When the waste water (raw water) containing fluorine and silicon is alkaline or neutral, most of the silicon in the waste water has been precipitated as sodium silicate (Na₂SiO₃) in the waste water. In such cases, the first step above (alkali addition step: the pH controlling tank 1 in terms of the apparatus) may be omitted. (In other words, the waste water (raw water) containing fluorine and silicon may be directly supplied to the solid-liquid separator 2.) For this reason, it is unnecessary to return the alkali recovered by the electrodialyser 5 to the pH controlling tank 1, and the alkali may be used in another step requiring alkali, e.g. alkali scrubber.

Now, a specific example of calcium fluoride recovery will be described.

### (Fourth Step (Calcium Fluoride Recovery Step))

In the fourth step, water-soluble calcium is added to the hydrogen fluoride acid solution (HF) separated in the third step, so that fluorine is recovered as calcium fluoride. As shown in Fig. 4, first, water-soluble calcium is added to the hydrogen fluoride acid solution having been supplied from the electrodialyser 5 to the reaction tank 3, and agitation is carried out by the agitator 3a. This hydrogen fluoride acid solution is acidic, and calcium fluoride (CaF₂) having relatively large particle sizes are precipitated (crystallized) as the solution is reacted with water-soluble calcium under acidic conditions.

Thereafter, the liquid in the reaction tank 3 is supplied to the sedimentation tank 4 and the calcium fluoride is precipitated at the bottom of the tank. Then the calcium fluoride is recovered from the bottom. The supernatant of the sedimentation tank 4 is supplied as treated waste water to a treatment facility (not illustrated) on the subsequent stage.

The recovery of calcium fluoride from the hydrogen fluoride acid solution (HF) may be carried out in a different manner: after adding water-soluble calcium to the hydrogen fluoride acid solution (HF) obtained in the third step and agitation is carried out, coagulative precipitation is performed. Examples of the coagulant include a nonionic polymer coagulant and an anionic polymer coagulant.

### (Chemical Consumption Reduction Effect)

Between (1) the waste water treatment facility 101 of the present embodiment having the electrodialyser 5 containing the bipolar membrane 21 and (2) the waste water treatment facility 100 (see Fig. 1) described above which is not provided with the electrodialyser 5, to what extent the chemical consumption was different was compared and calculated. The waste water treatment facility 100 shown in Fig. 1 is different from the waste water treatment facility 101 in that the facility 100 is not provided with the electrodialyser 5 (NaOH is not returned to the pH controlling tank 1) and a pH adjustor such as hydrochloric acid is added to the reaction tank 3. Except these points, the waste water treatment facility 100 is identical with the waste water treatment facility 101.

As to experimental conditions, the amount of waste water (raw water) containing fluorine and silicon was 10m³ and the fluorine concentration in the waste water was 10%. Furthermore, fluorine was the only acid in the raw water.

### (Alkali Consumption)

The amount of NaOH (sodium hydroxide) used (required) in the waste water treatment facility 101 of the present embodiment was 680kg. On the other hand, the amount of NaOH (sodium hydroxide) used (required) in the waste water treatment facility 100 described above was 2101 kg.

### (Acid Consumption)

The amount of HCl (hydrochloric acid) used (required) in the waste water treatment facility 101 of the present embodiment was 0kg. On the other hand, the amount of HCl (hydrochloric acid) used (required) in the waste water treatment facility 100 described above was 1900kg**.**

As the comparison above clearly shows, the present invention makes it possible to significantly reduce the chemical consumption, i.e. to reduce the costs for the chemicals. As the amount of waste water (raw water) to be treated increases, the effect of the reduction in the costs of the chemicals becomes more significant.

While an illustrative and presently preferred embodiment of the present invention have been described in detail herein, it is to be understood that the inventive concepts may be otherwise variously embodied and employed within the scope of the appended claims.

### REFERENCE NUMERALS

- 1:: pH CONTROLLING TANK
- 2:: SOLID-LIQUID SEPARATOR
- 3:: REACTION TANK
- 4:: SEDIMENTATION TANK
- 100:: WASTE WATER TREATMENT FACILITY (FACILITY FOR TREATING FLUORINE-CONTAINING WASTE WATER)

## Claims

1. A method for treating an acidic waste water containing fluorine and silicon in the form of fluosilicate, comprising:
an alkali addition step of adding alkali to an acidic waste water containing fluorine and silicon in the form of fluosilicate;
a solid-liquid separation step of conducting solid-liquid separation of silicate precipitated as a result of the alkali addition step;
a hydrogen fluoride separation step of separating a separated liquid obtained by the solid-liquid separation step into an acidic solution containing hydrogen fluoride and an alkaline solution by supplying the separated liquid to an electrodialyser (5) including a bipolar membrane, a cation exchange membrane, and an anion exchange membrane;
and a step of recovering calcium fluoride in which water-soluble calcium is added to the acidic solution containing the hydrogen fluoride so that calcium fluoride is precipitated, and in which the precipitated calcium fluoride is recovered.

2. The method according to claim 1, wherein in the alkali addition step the pH of the waste water is adjusted to be 6 or higher.

3. The method according to claim 1 or 2, wherein
in the alkali addition step, an amount of the added alkali is one equivalent or more of the fluorine in the waste water.

4. The method according to any one of claims 1 to 3, wherein
the alkali is sodium hydroxide or potassium hydroxide.

5. The method according to any one of claims 1 to 4, wherein
the alkaline solution separated in the hydrogen fluoride separation step is caused to return to the alkali addition step and added to the waste water in the alkali addition step.

6. A facility for treating an acidic waste water containing fluorine and silicon in the form of fluosilicate according to the method of anyone of claims 1 to 5, comprising:
a precipitation unit (1) adapted for precipitating silicate by adding alkali to an acidic waste water containing fluorine and silicon in the form of fluosilicate;
a solid-liquid separator (2) which is provided on the downstream of the precipitation unit (1) and is adapted for obtaining a separated liquid containing fluorine by conducting solid-liquid separation of the precipitated silicate;
an electrodialyser (5) which is provided downstream of the solid-liquid separator (2) and includes a bipolar membrane, a cation exchange membrane, and an anion exchange membrane, which is adapted such that the separated liquid is separated into an acidic solution containing hydrogen fluoride and an alkaline solution; and
a calcium fluoride recovery unit comprising a reaction tank (3) and a sedimentation tank (4) which is provided on the downstream of the electrodialyser (5), the sedimentation tank (4) being provided downstream of the reaction tank (3), wherein the calcium fluoride recovery unit is adapted to recover calcium fluoride by adding water-soluble calcium to the acidic solution containing hydrogen fluoride in the reaction tank (3), so that calcium fluoride is precipitated, and by recovering the precipitated calcium fluoride from the bottom of the sedimentation tank (4).

7. The facility for treating fluorine-containing waste water according to claim 6, further comprising:
an alkali returning unit (6) adapted for returning the alkaline solution separated by the electrodialyser (5) to the precipitation unit and adding the alkaline solution to the waste water.

## Patentansprüche

1. Verfahren für die Behandlung eines sauren Abwassers, das Fluor und Silicium in der Form von Fluorsilicat enthält, umfassend:
einen Basezugabeschritt der Zugabe einer Base zu einem sauren Abwasser, das Fluor und Silicium in der Form von Fluorsilicat enthält;
einem Feststoff-Flüssigkeits-Abtrennungsschritt des Durchführens einer Feststoff-Flüssigkeitsabtrennung von Silicat, das als ein Ergebnis des Basezugabeschritts ausgefällt wurde;
einen Wasserstofffluorid-Abtrennungsschritt des Abtrennens einer abgetrennten Flüssigkeit erhalten durch den Feststoff-Flüssigkeits-Abtrennungsschritt in eine saure Lösung, die Wasserstofffluorid enthält, und in eine basische Lösung durch Zufuhr der abgetrennten Flüssigkeit zu einem Elektrodialysator (5), der eine bipolare Membran, eine Kationenaustauschmembran und eine Anionenaustauschmembran enthält;
und einen Schritt des Rückgewinnens von Calciumfluorid, in welchem wasserlösliches Calcium zu der sauren Lösung gegeben wird, die das Wasserstofffluorid enthält, sodass Calciumfluorid ausgefällt wird, und in welchem das ausgefällte Calciumfluorid rückgewonnen wird.

2. Verfahren nach Anspruch 1, wobei in dem Basezugabeschritt der pH des Abwassers eingestellt wird, um 6 oder höher zu sein.

3. Verfahren nach Anspruch 1 oder 2, wobei
in dem Basezugabeschritt eine Menge der zugegebenen Base ein Äquivalent oder mehr des Fluors in dem Abwasser ist.

4. Verfahren nach einem der Ansprüche 1 bis 3, wobei die Base Natriumhydroxid oder Kaliumhydroxid ist.

5. Verfahren nach einem der Ansprüche 1 bis 4, wobei
die basische Lösung, die in dem Wasserstofffluorid-Abtrennungsschritt abgetrennt wird, dazu gebracht wird, zu dem Basezugabeschritt zurückzukehren, und zu dem Abwasser in dem Basezugabeschritt zugegeben wird.

6. Anlage für die Behandlung eines sauren Abwassers, das Fluor und Silicium in der Form von Fluorsilicat enthält, nach dem Verfahren nach einem der Ansprüche 1 bis 5, umfassend:
einer Ausfälleinheit (1), die dafür angepasst ist, Silicat durch Zugabe einer Base zu einem sauren Abwasser, das Fluor und Silicium in der Form von Fluorsilicat enthält, auszufällen;
einem Feststoff-Flüssigkeits-Separator (2), welcher stromabwärts der Ausfällungseinheit (1) vorgesehen ist und dafür angepasst ist, eine abgetrennte Flüssigkeit, die Fluor enthält, durch Durchführen einer Feststoff-Flüssigkeits-Abtrennung des ausgefällten Silicats zu erhalten;
einem Elektrodialysator (5), welcher stromabwärts von dem Feststoff-Flüssigkeits-Separator (2) vorgesehen ist und eine bipolare Membran, eine Kationenaustauschmembran und eine Anionenaustauschmembran enthält, welcher derartig angepasst ist, dass die abgetrennte Flüssigkeit in eine saure Lösung, die Wasserstofffluorid enthält, und in eine basische Lösung aufgetrennt wird; und
eine Calciumfluoridrückgewinnungseinheit, die einen Reaktionsbehälter (3) und einen Sedimentationsbehälter (4) umfasst, welcher stromabwärts des Elektrodialysators (5) vorgesehen ist, wobei der Sedimentationsbehälter (4) stromabwärts vom Reaktionsbehälter (3) vorgesehen ist, wobei die Calciumfluoridrückgewinnungseinheit dafür angepasst ist, Calciumfluorid durch Zugabe von wasserlöslichem Calcium zu der Wasserstofffluorid enthaltenden sauren Lösung in dem Reaktionsbehälter (3), sodass das Calciumfluorid ausgefällt wird, und durch Rückgewinnen des ausgefällten Calciumfluorids von dem Boden des Sedimentationsbehälter (4), rückzugewinnen.

7. Anlage für die Behandlung von fluorhaltigem Abwasser nach Anspruch 6, ferner umfassend:
eine Baserückführeinheit (6), die dafür angepasst ist, die basische durch den Elektrodialysator (5) abgetrennte basische Lösung zu der Ausfällungseinheit zurückzuführen und die basische Lösung zu dem Abwasser zuzugeben.

## Revendications

1. Procédé pour traiter des eaux usées acide contenant du fluor et du silicium sous la forme de fluosilicate, comprenant :
une étape d'ajout d'alcali qui consiste à ajouter un alcali à des eaux usées acides contenant du fluor et du silicium sous la forme de fluosilicate ;
une étape de séparation solide-liquide qui consiste à effectuer la séparation solide-liquide du silicium précipité à la suite de l'étape d'ajout d'alcali ;
une étape de séparation du fluorure d'hydrogène qui consiste à séparer un liquide séparé obtenu par l'étape de séparation solide-liquide dans une solution acide contenant du fluorure d'hydrogène et dans une solution alcaline en alimentant un électrodialyseur (5) comportant une membrane bipolaire, une membrane échangeuse de cations, et une membrane échangeuse d'anions en liquide séparé ;
et une étape de récupération de fluorure de calcium dans laquelle le calcium soluble dans l'eau est ajouté à la solution acide contenant du fluorure d'hydrogène de sorte que le fluorure de calcium soit précipité, et dans laquelle le fluorure de calcium précipité est récupéré.

2. Procédé selon la revendication 1, dans lequel dans l'étape d'ajout d'alcali le pH des eaux usées est ajusté pour être supérieur ou égal à 6.

3. Procédé selon la revendication 1 ou 2, dans lequel dans l'étape d'ajout d'alcali, une quantité de l'alcali ajouté est un équivalent ou plus du fluor dans les eaux usées.

4. Procédé selon l'une quelconque des revendications 1 à 3, dans lequel
l'alcali est l'hydroxyde de sodium ou l'hydroxyde de potassium.

5. Procédé selon l'une quelconque des revendications 1 à 4, dans lequel
la solution alcaline séparée dans l'étape de séparation du fluorure d'hydrogène est amenée pour être renvoyée à l'étape d'ajout d'alcali et ajoutée aux eaux usées dans l'étape d'ajout d'alcali.

6. Installation pour traiter des eaux usées acides contenant du fluor et du silicium sous la forme de fluosilicate selon le procédé de l'une quelconque des revendications 1 à 5, comprenant :
une unité de précipitation (1) adaptée pour précipiter du silicate en ajoutant un alcali à des eaux usées acides contenant du fluor et du silicium sous la forme de fluosilicate ;
un séparateur solide-liquide (2) qui est prévu en aval de l'unité de précipitation (1) et est adapté pour obtenir un liquide séparé contenant du fluor en effectuant une séparation solide-liquide du silicate précipité ;
un électrodialyseur (5) qui est prévu en aval du séparateur solide-liquide (2) et qui comporte une membrane bipolaire, une membrane échangeuse de cations, et une membrane échangeuse d'anions, qui est adapté de sorte que le liquide séparé soit séparé dans une solution acide contenant du fluorure d'hydrogène et une solution alcaline ; et
une unité de récupération de fluorure de calcium comprenant un réservoir de réaction (3) et un réservoir de sédimentation (4) qui est prévu sur l'aval de l'électrodialyseur (5), le réservoir de sédimentation (4) étant prévu en aval du réservoir de réaction (3), où l'unité de récupération de fluorure de calcium est adaptée pour récupérer le fluorure de calcium par l'ajout du calcium soluble dans l'eau à la solution acide contenant du fluorure d'hydrogène dans le réservoir de réaction (3), de sorte que le fluorure de calcium soit précipité, et par la récupération du fluorure de calcium précipité à partir du fond du réservoir de sédimentation (4).

7. Installation pour traiter des eaux usées contenant du fluor selon la revendication 6, comprenant en outre :
une unité de renvoi d'alcali (6) adaptée pour renvoyer la solution alcaline séparée par l'électrodialyseur (5) à l'unité de précipitation et ajouter la solution alcaline aux eaux usées.
